Europäisches Patentamt

(19) European Patent Office

Office européen des brevets

(11) Veröffentlichungsnummer: **0 089 492**
**B1**

(12) **EUROPÄISCHE PATENTSCHRIFT**

(45) Veröffentlichungstag der Patentschrift:
13.02.85

(51) Int. Cl.⁴: **F 02 D 9/02**

(21) Anmeldenummer: 83101507.8

(22) Anmeldetag: 17.02.83

(54) **Brennkraftmaschine.**

(30) Priorität: 24.03.82 DE 3210808

(43) Veröffentlichungstag der Anmeldung:
28.09.83 Patentblatt 83/39

(45) Bekanntmachung des Hinweises auf die Patenterteilung:
13.02.85 Patentblatt 85/7

(84) Benannte Vertragsstaaten:
DE FR GB IT SE

(56) Entgegenhaltungen:
DE - A - 2 926 105
FR - A - 1 398 895
FR - A - 2 402 073
GB - A - 1 161 632
GB - A - 2 064 657
GB - A - 2 068 456
US - A - 4 181 944
US - A - 4 237 830

(73) Patentinhaber: AUDI NSU AUTO UNION
AKTIENGESELLSCHAFT, Felix-Wankelstrasse,
D-7107 Neckarsulm (DE)

(72) Erfinder: Pagel, Ernst-Olav, Dr., Bergstrasse 5,
D-8079 Böhmfeld (DE)

(74) Vertreter: Le Vrang, Klaus, AUDI NSU AUTO UNION
Aktiengesellschaft Postfach 220 Patentabteilung,
D-8070 Ingolstadt (DE)

## Beschreibung

Die Erfindung bezieht sich auf eine Brennkraftmaschine gemäß dem Oberbegriff des Anspruchs 1.

Eine derartige Brennkraftmaschine ist aus der FR-A-2 402 073 bekannt, die Brennkraftmaschine wird über eine in dem Saugrohr befindliche Drosselklappe gesteuert, die mechanisch durch die Gaspedalstellung eingestellt wird. Um eine vorgegebene Höchstgeschwindigkeit nicht zu überschreiten, sieht die FR-A-2 402 073 vor, daß eine weitere Drosselklappe in dem Saugrohr der Brennkraftmaschine angeordnet ist, die dann schließt, wenn die voreingestellte Höchstgeschwindigkeit überschritten wird. Dabei ist eine elektronische Logik vorgesehen, die das Überschreiten der Geschwindigkeit erfaßt und dementsprechend die Drosselklappe steuert.

Es ist gegenwärtig in besonderem Maße wünschenswert, Brennkraftmaschinen, insbesondere solche, die in Kraftfahrzeuge eingebaut werden, mit möglichst geringem Brennstoffverbrauch zu betreiben. Eine Möglichkeit zur Verwirklichung geringen Brennstoffverbrauches ist es, den Wirkungsgrad der Brennkraftmaschine unter allen Betriebsbedingungen zu optimieren. Dazu bietet sich u. a. der Betrieb von elektronisch gesteuerten Drosselklappen an, die nicht, wie herkömmlich, mechanisch direkt betätigt werden, sondern der Öffnungswinkel der Drosselklappe wird über eine elektronische Logik bestimmt, in die u. a. die Informationen der Anforderung durch den Fahrer eingeht. Dies kann vorteilhafterweise dadurch geschehen, daß die Stellung des Gaspedals abgefragt wird. Insoweit ist die elektronische Drosselklappe mit der mechanischen vergleichbar. Zusätzlich jedoch werden der Logik weitere Informationen eingespeist, die es ermöglichen, daß die Öffnungs- und Schließgeschwindigkeit der Drosselklappe im Hinblick auf Lastzustand der Brennkraftmaschine, Geschwindigkeit des Fahrzeuges und ähnliches optimiert wird.

Nachteilig dabei ist jedoch, daß die Sicherheit derartiger elektronischer Drosselklappen, wenn überhaupt nur mit großem Schaltungsaufwand diejenige von mechanischen Drosselklappen erreicht. Die Kosten für elektronische Drosselklappen werden dadurch erheblich erhöht. Insbesondere ist streng darauf zu achten, daß es vermieden wird, daß bei einem Ausfall der Elektronik die Drosselklappe voll öffnet und somit das Fahrzeug beschleunigt, ohne daß sich dieser Zustand abstellen läßt.

Aufgabe der Erfindung ist es, ein System zu schaffen, das zugleich hohe Sicherheit und optimale Steuerung verwirklicht.

Die Aufgabe wird gelöst durch den unabhängigen Patentanspruch.

Erfindungsgemäß vorgesehen ist die Kombination von zwei Drosselklappen, deren eine mechanisch angesteuert wird und deren zweite elektronisch angesteuert wird. Die elektronisch angesteuerte Drosselklappe dient jedoch nicht nur zur Abregelung beispielsweise bei Überschreiten der vorgegebenen Höchstgeschwindigkeit, sondern wird vielmehr in ihrer Stellung durch eine Reihe verschiedener Betriebsparameter beeinflußt. Dadurch ist die Optimierung des Betriebes der Brennkraftmaschine möglich, die primäre Steuerung der Brennkraftmaschine erfolgt also über die elektronisch angesteuerte Drosselklappe.

Die bisherige Sicherheit, die bei mechanischen Drosselklappen erreicht wurde, wird jedoch nicht aufgegeben, da das Gaspedal gleichzeitig die mechanische Drosselklappe ansteuert, die bei dem heutigen Stand der Technik ein ausgereiftes Bauteil darstellt. Die Kombination dieser beiden Drosselklappen ermöglicht somit zum einen einen sicheren Betrieb, der durch die mechanische Drosselklappe gegeben ist, gleichzeitig werden die Vorteile, die eine elektronisch gesteuerte Drosselklappe bietet, wahrgenommen. Diese Anordnung bringt weiterhin den Vorteil mit sich, daß die zweite, die elektronisch angesteuerte Drosselklappe in ihrem Aufbau besonders einfach gestaltet werden kann, da besondere Dichtigkeitsanforderungen nicht gestellt werden müssen. Diese werden vielmehr durch die übliche und herkömmliche mechanische Drosselklappe wahrgenommen.

Aus dem Stand der Technik sind weiterhin bekannt die GB-A-1 161 632, die Turbulenzklappen zur Verbesserung der Gemischaufbereitung im Saugrohr beschreibt, wobei diese Turbulenzklappen drei verschiedene Positionen einnehmen können. Eine Optimierung des Betriebes der Brennkraftmaschine in Abstimmung auf die Betriebsparameter ist durch die Turbulenzklappen mit ihren drei diskreten Stellungen nicht möglich. Die FR-A-1 398 895 beschreibt eine zweite Drosselklappe, die einer mechanischen nachgeschaltet ist und zum Drosseln des Motors während des automatischen Schaltens des Getriebes dient. Die GB-A-2 068 456 beschreibt eine Drosselklappe deren Öffnungswinkel unter anderem über eine Elektronik einstellbar ist. Eine Nockensteuerung ist vorgesehen, um den Öffnungswinkel der Drosselklappe zu begrenzen. Keine dieser Entgegenhaltungen schlägt die Kombination einer mechanisch angesteuerten Drosselklappe sowie einer elektronisch angesteuerten Drosselklappe abhängig von den verschiedenen Betriebsparametern des Kraftfahrzeuges vor, um die jeweiligen Vorteile der beiden Systeme auszunutzen und die jeweils inhärenten Nachteile der Einzelsysteme zu vermeiden.

Weitere, im Rahmen der Elektronik zu berücksichtigende Parameter werden im Patentanspruch 2 vorgeschlagen.

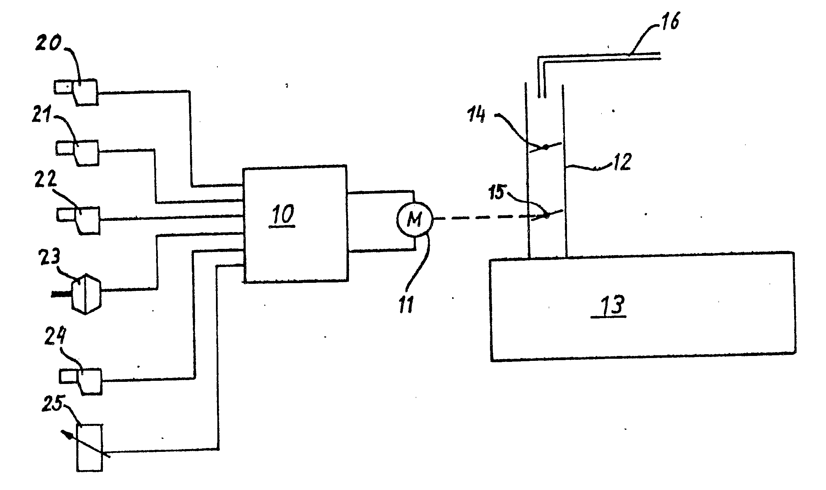

Die einzige Figur zeigt ein Prinzipschaltbild der Anordnung von Drosselklappe und Zusatzdrosselklappe.

Der Motor 13, der mindestens einen Zylinder aufweist, ist als einfacher Kasten dargestellt, da sein innerer Aufbau für die vorliegende Erfindung ohne Belang ist. Die Brennstoffzufuhr zu den Zylindern im Motor 13 geschieht über ein Saugrohr 12, durch das ein Brennstoff/Luftgemisch angesaugt wird. Der Brennstoff kann beispielsweise über eine Einpunkt-Einspritzung 16 zugeführt werden. Die Menge des zu den Zylindern gelangenden Brennstoff/Luftgemisches wird gesteuert durch eine Drosselklappe 14 und eine Zusatzdrosselklappe 15. Die Drosselklappe 14 wird in herkömmlicher Weise mechanisch angesteuert, üblicherweise über einen Seilzug, der mit dem Gaspedal in Verbindung steht.

Der Drosselklappe 14 ist eine Zusatzdrosselklappe 15 in Strömungsrichtung nachgeschaltet, die über einen elektrischen Stellmotor 11 betätigt wird. Der Öffnungsgrad dieser Zusatzdrosselklappe 15 und die Geschwindigkeit ihrer Stellungsveränderung wird über eine elektronische Logik 10 gesteuert. Die elektronische Logik 10 erhält Informationen von mehreren Sensoren, die schematisch mit den Bezugszeichen 20 bis 25 versehen sind. Der Sensor 25 erfaßt die Stellung des Gaspedals. Die Sensoren 20 und 21 sollen die Umdrehungszahl der Antriebsräder feststellen, der Sensor 22 soll die Umdrehungszahl des Motors erfassen, der Sensor 23 ist üblicherweise im Saugrohr 12 untergebracht und erfaßt den dort herrschenden Unterdruck, während der Sensor 24 einen Geschwindigkeitsgeber darstellt.

Wenn nun beispielsweise eine starke Beschleunigung des von der Brennkraftmaschine angetriebenen Fahrzeuges gewünscht wird, wird der Fahrer die Drosselklappe 14 mechanisch voll öffnen. Damit kann jedoch beispielsweise der Effekt eintreten, daß die Räder des Kraftfahrzeuges durchdrehen. Um dies zu verhindern, ist die Logik 10 vorgesehen, die aus den Informationen der Sensoren 20, 21 und 24 erfaßt, daß ein Durchdrehen der Räder gegeben ist. Dementsprechend wird die Logik die Zusatzdrosselklappe 15 so weit schließen, daß die Antriebsräder nicht weiter durchdrehen und die Zusatzdrosselklappe im weiteren Verlauf der Beschleunigung allmählich öffnen, um den unerwünschten Betriebszustand zu vermeiden.

Über die Elektronik läßt sich beispielsweise auch verwirklichen, daß stets auf der optimalen Motorkennlinie gefahren wird bzw. beschleunigt wird, so daß der Wirkungsgrad der Brennkraftmaschine möglichst groß gehalten wird. Somit dient die elektronische Drosselklappe dazu, die Sicherheit und die Wirtschaftlichkeit des Fahrzeugs zu erhöhen.

Die Kombination von Drosselklappe 14 und Zusatzdrosselklappe 15 stellt sicher, daß auch bei Ausfall der Elektronik 10 und dementsprechende Ansteuerung des Motors 11 keine Probleme auftreten. Sollte durch einen Schadensfall die Logik 10 die Zusatzdrosselklappe 15 vollständig öffnen, kann dennoch keine unerwünschte Beschleunigung auftreten, da die Drosselklappe 14, die rein mechanisch betätigt wird, das Brennstoff/Luftgemisch nur in dem gewünschten Ausmaße eintreten läßt. Somit bleibt die Sicherheit des Betriebssystems auch dann erhalten, wenn die elektronisch angesteuerte Zusatzdrosselklappe 15 ungewollt öffnet.

Auch von der konstruktiven Seite her bietet das System der hintereinander geschalteten mechanischen Drosselklappe 14 und der elektronisch gesteuerten Zusatzdrosselklappe 15 Vorteile, da an die Dichtungseigenschaften der elektronischen Zusatzdrosselklappe 15 keine besonderen Anforderungen gestellt werden, hier kann vielmehr auf die ausgereiften und im Einsatz bewährten Teile bei mechanischen Drosselklappen zurückgegriffen werden, da die Drosselklappe 14 diese Funktion vollständig erfüllt.

## Patentansprüche

1. Brennkraftmaschine (13) zur Verwendung in einem Kraftfahrzeug, mit mindestens einem Zylinder, einem zu den Zylindern führenden Saugrohr (12), einer Brennstoffzufuhr (16), einem Gaspedal, einer in dem Saugrohr (12) vorgesehenen ersten Drosselklappe (14), die mechanisch angesteuert wird abhängig von der Stellung des Gaspedals, einer zweiten Drosselklappe (15), deren Öffnungsgrad von einem Stellglied (11) eingestellt wird, das die zweite Drosselklappe (15) entsprechend einem Signal einstellt, das von einer elektronischen Logik (10) geliefert wird, wobei der elektronischen Logik (10) Informationen über Betriebsparameter des Kraftfahrzeuges zugeführt werden, dadurch gekennzeichnet, daß zu den der elektronischen Logik (10) zugeführten Informationen die Gaspedalstellung (25) und die Last (23) der Brennkraftmaschine (13) gehören, und die zweite Drosselklappe (15) zur Optimierung des Betriebes der Brennkraftmaschine unter Berücksichtigung von Gaspedalstellung und Last eingestellt wird.

2. Brennkraftmaschine nach Anspruch 1, dadurch gekennzeichnet, daß zu den Informationen die Umdrehungszahlen der angetriebenen Räder des Kraftfahrzeuges und die Drehzahl der Brennkraftmaschine gehören.

## Claims

1. Internal combustion engine (13) for use in a vehicle having at least one cylinder, an intake manifold (12) leading to said cylinders, a fuel supply means (16), an accelerator, a first throttle (14) provided in said intake manifold (12), said first throttle (14) being mecanically controlled by the position of the accelerator, a secon throttle (15) the opening degree of which is caused by a servo means (11) positioning said second throttle (14) according to a signal generated by an electronic logic unit (10), said electronic logic unit (10) receiving information of the operational parameters of the vehicle, characterized in that said information delivered to the electronic logic unit (10) comprises the position of the accelerator (25), and the load (23) of the internal combustion engine (13), and that said second throttle (15) ist positioned to optimize the operation of the internal combustion engine with respect to the accelerator position and the load.

2. Internal combustion engine according to claim 1, characterized in that the information comprises the speed of the powered wheels of the vehicle and the speed of the internal combustion engine.

**Revendications**

1. Moteur à combustion interne (13) destiné à être utilisé dans un véhicule automobile et comprenant au moins un cylindre, un collecteur d'admission (12) aboutissant au cylindre, une alimentation de carburant (16), une pédale d'accélérateur, un premier papillon des gaz (14) prévu dans le collecteur d'admission (12) et qui est commandé mécaniquement en fonction de la position de la pédale d'accélérateur, un second papillon des gaz (15) dont le degré d'ouverture est déterminé par un organe de réglage (11) qui règle le secon papillon des gaz (15) d'aprés un signal qui est délivré par une logique électronique (10), la logique électronique (10) recevant des informations sur des paramétres de fonctionnement du véhicule automobile, caractérisé en ce que les informations fournies à la logique électronique (10) comprenent la position de la pédale d'accélérateur (25) et la charge (23) du moteur à combustion interne (13) et en ce que le second papillon des gaz (15) est réglé en tenant compte de la position de la pédale d'accélérateur et de la charge, en vue de l'optimisation du fonctionnement du moteur à combustion interne.

2. Moteur à combustion interne selon la revendication 1, caractérisé en ce que les informations comprennent les vitesses de rotation des roues motrices du véhicule et la vitesse de rotation du moteur à combustion interne.